# EUROPÄISCHE PATENTSCHRIFT

(11) **EP 2 860 505 B1**
(45) Veröffentlichungstag und Bekanntmachung des Hinweises auf die Patenterteilung: **26.09.2018**
(21) Anmeldenummer: 14172628.1
(22) Anmeldetag: 16.06.2014
(51) Int. Cl.: B23K 1/00, B23K 1/19, B23K 31/02, C04B 37/00, G01L 7/08, G01L 9/00, G01L 19/14

(54) **Messanordnung mit einer keramischen Messzelle**
Measuring arrangement with a ceramic measuring cell
Dispositif de mesure équipé d'une cellule de mesure en céramique

(30) Priorität: 14.10.2013 DE 102013220735
(43) Veröffentlichungstag der Anmeldung: 15.04.2015
(73) Patentinhaber: VEGA Grieshaber KG, 77709 Wolfach (DE)
(72) Erfinder: Kopp, Thomas, 77709 Wolfach (DE)
(74) Vertreter: Westphal, Mussgnug & Partner Patentanwälte mbB

(56) Entgegenhaltungen:
- EP-A1- 0 735 353
- EP-A1- 1 329 960
- WO-A1-2009/079803
- DE-A1- 10 050 300
- DE-A1-102006 035 230
- US-A- 4 898 035
- US-A1- 2002 023 499

## Beschreibung

Die vorliegende Erfindung betrifft eine Messanordnung mit einer keramischen Messzelle gemäß dem Oberbegriff des Patentanspruchs 1.

Messanordnungen mit keramischen Messzellen sind aus dem Stand der Technik, beispielsweise als Druckmessanordnungen mit Drucksensoren zur Füllstandmessung bekannt. Zum Einsatz kommen keramisch kapazitive Druckmesszellen, die mittels einer Elastomerdichtung in einem Prozessanschluss, der zur Anordnung der Druckmesszelle in einer Prozessumgebung dient, angeordnet sind. Keramische Messzellen werden gerne in Anwendungen eingesetzt, bei denen die Härte und Robustheit der Keramik vorteilhaft ist. Bei keramischen Druckmesszellen wird außerdem als Vorteil empfunden, dass diese eine flache keramische Membran aufweisen können, die einerseits abrasionsfest und andererseits einfach zu reinigen ist.

Bei den aus dem Stand der Technik bekannten Messanordnungen mit keramischen Messzellen wird es als nachteilig empfunden, dass die verwendeten Elastomerdichtungen nur beschränkt abrasionsfest und Alterungsprozessen unterworfen sind.

Außerdem sinkt die Elastizität der verwendeten Elastomerdichtungen bei tiefen Temperaturen, so dass beispielsweise bei Temperaturen unter -40°C aufgrund der sinkenden Elastizität Schwingungen des Füllstandsmessgerätes nicht mehr ausgeglichen werden können und es zu einer Spaltbildung zwischen der Druckmesszelle und dem Prozessanschluss kommen kann. Ein weiterer Nachteil von Messanordnungen mit Elastomerdichtungen ist, dass diese in hochreinen Anwendungen, beispielsweise im Pharma- oder Lebensmittelbereich nur bedingt zum Einsatz kommen können, da sie entweder nicht zugelassen sind oder wenigstens erhöhte Wartungsverpflichtungen für den Betreiber bedingen.

EP 1 329 960 A1 offenbart eine Anordnung mit einer kapazitiven Druckmesszelle und einem metallischen Rahmen, wobei die Druckmesszelle an einer Deckplatte aus Saphir angeordnet ist und durch eine angeschweißte Metallplatte befestigt ist. Die Metallplatte weist einen größeren Innendurchmesser als die Deckplatte auf. Die Deckplatte und die Druckmesszelle werden durch eine Beschichtung aus Aluminiumoxid verbunden, die durch Erwärmen, Irradiation mit UV-Strahlungen und Ausübung eines elektrischen Feldes von einer ersten Phase in eine zweite Phase übergeht.

Es ist die Aufgabe der vorliegenden Erfindung eine weitergebildete Messanordnung mit einer keramischen Messzelle zur Verfügung zu stellen. Vorzugsweise weist diese die Nachteile aus dem Stand der Technik nicht auf.

Diese Aufgabe wird durch eine Messanordnung mit den Merkmalen des Patentanspruchs 1 gelöst.

Eine erfindungsgemäße Messanordnung mit einer keramischen Messzelle und einem metallischen Prozessanschluss zum Verbinden der Messzelle mit einer Messumgebung, bei der die Messzelle in den Prozessanschluss dichtungsfrei, das heißt unter Ausschluss der Verwendung von Polymerschichten im Kontakt mit dem Prozessmedium, und diffusionsdicht befestigt ist, zeichnet sich dadurch aus, dass die Messzelle an einem Keramikring befestigt ist, der an einem Metallring zur Befestigung in dem Prozessanschluss angeordnet ist. Als Dichtung im Sinne der vorliegenden Anmeldung werden insbesondere lösbare Dichtelemente verstanden. Diese sind üblicherweise aus Elastomeren hergestellt und werden pressend zwischen zwei Bauelementen gehalten.

Dichtungsfrei ist im Sinne der vorliegenden Anmeldung daher insbesondere als unter Ausschluss der Verwendung von Polymerschichten im Kontakt mit dem Prozessmedium zu verstehen.

Eine Anordnung der Messzelle an dem Prozessanschluss bedeutet damit, dass diese in unmittelbarem Kontakt mit einem Prozessmedium steht und nicht, wie dies im Stand der Technik beispielsweise bekannt ist, über einen Druckmittler abgeschirmt ist.

Für die vorliegende Messanordnung ist es damit ausschlaggebend, dass die Messzelle ihrerseits an einem Keramikring, der vorzugsweise einen an die Messzelle angepassten thermischen Ausdehnungskoeffizienten aufweist, und dieser Keramikring wiederum an einem Metallring befestigt ist. Der Metallring dient zur Befestigung der Anordnung in einem Prozessanschluss und ist vorzugsweise ebenfalls in seinem thermischen Ausdehnungskoeffizienten an den Keramikring und vorzugsweise die Messzelle angepasst.

Durch die vorliegende Anordnung wird eine gut reinigbare und insbesondere totraumfreie Befestigung der Messzelle zur Verfügung gestellt, die sowohl in Prozessoren der Lebensmittel- als auch der Pharmaindustrie dadurch besonders gut eingesetzt werden kann.

In einer Ausgestaltungsform kann die Messzelle der Messanordnung als Druckmesszelle mit einer keramischen Membran ausgebildet sein, was insbesondere für Druckmessanordnungen, bei denen es auf eine Abrasionsfestigkeit der Anordnung ankommt, vorteilhaft ist.

Der Keramikring ist an der Messzelle erfindungsgemäß mit einer Lotverbindung befestigt. Eine Lotverbindung im Zusammenhang mit der vorliegenden Anmeldung soll jegliche stoffschlüssige Verbindung unter Verwendung eines Schmelzlotes sein. Bevorzugt ist die Lotverbindung mit einem Hartlot oder einem Glaslot hergestellt, wobei das Hartlot vorzugsweise eine der Silberlegierungen AgCuTi3, AgCuTi-1,8 ist. Weitere mögliche Lote sind die Legierungen Ag, AgCu26Ti3 oder AgCu46Ti6.

Insbesondere eine Verglasung des Keramikrings mit der Druckmesszelle unter Verwendung eines Glaslots wird als vorteilhaft angesehen, da das Glaslot nach der Verbindung der beiden Komponenten einen thermischen Ausdehnungskoeffizienten aufweist, der in etwa dem der keramischen Druckmesszelle und des Keramikrings entspricht. Eine Glaslotverbindung ist ferner druck- und diffusionsdicht, so dass sich diese hervorragend für eine Verwendung bei einer Druckmesszelle eignet ist. Ein weiterer Vorteil einer Glaslotverbindung ist, die im Vergleich zu beispielsweise Hartlotverbindungen niedrigere Prozesstemperatur bei der Erstellung der Verbindung.

Erfindungsgemäß ist der Metallring axial zu dem Keramikring angeordnet, so dass eine Anordnung geschaffen wird, die in Axialrichtung gesehen, eine größere Bautiefe aufweist, an ihrer dem Prozess zugewandten Vorderseite aber ohne eine Fügestelle zwischen Verankerung und Metall auskommt. Das ist insbesondere vorteilhaft, da Metall-Metall-Fügungen gut verschliffen werden können.

Der Metallring und der Keramikring sind erfindungsgemäß mit einer Hartlötverbindung miteinander verbunden. Eine solche Hartlötverbindung bietet sich sowohl bei einer axialen als auch bei einer radialen Anordnung des Metallrings zu dem Keramikring an und kann sogar eine durch Aufschrumpfen des Metallrings auf den Keramikring hergestellte mechanische Verbindung zusätzlich unterstützen.

Der Metallring weist erfindungsgemäß einen Innendurchmesser auf, der einem Innendurchmesser des Keramikrings entspricht, wobei ein Außendurchmesser des Metallrings größer als ein Außendurchmesser des Keramikrings gewählt ist. Der Metallring und der Keramikring schließen damit an ihrem Innendurchmesser bündig miteinander ab, wobei der Metallring den Keramikring in Radialrichtung gesehen überragt. Auf diese Weise wird besonders einfach ein umlaufender Rand gebildet, der für eine Verbindung des Metallrings mit dem Prozessanschluss, beispielsweise durch Verschweißen genutzt werden kann.

Die Hartlötverbindung zwischen dem Metallring und dem Keramikring wird vorzugsweise mit einem Hartlot bevorzugt einem Silberbasislot hergestellt. Silberbasislote mit geringem Anteil an Cu weisen insbesondere bei Anwendungen in einem sauren oder chloridhaltigen Medium verbesserte Beständigkeit auf. Der Anteil von Titan im Lot beeinflusst die Anbindung an die Keramik, wobei bei einem Anteil zwischen 3% und 5% besonders gute Ergebnisse erzielt werden.

In einer vorteilhaften Ausgestaltung ist der Keramikring vorderseitig an der Messzelle angeordnet. Insbesondere bei Druckmesszellen, die vorderseitig eine Membran aufweisen ist dies vorteilhaft, da eine umlaufende Anordnung des Keramikrings potentiell in Radialrichtung wirkende Spannungen die Messzelle einbringen würde, die bei Temperaturschwankungen ein Messergebnis der kapazitiv arbeitenden Druckmesszelle aufgrund einer durch die seitlich eingebrachten Spannungen hervorgerufenen Verbiegung der Membran hervorgerufen würden. Der Keramikring ist dabei vorzugsweise umlaufend mit der Messzelle verbunden und weist vorzugsweise einen Außendurchmesser auf, der die Messzelle in Radialrichtung überragt.

Um eine möglichst gute thermische Anpassung zu erreichen sind der Keramikring und die Messzelle vorzugsweise aus dem gleichen Material, bevorzugt aus Aluminiumoxid, gefertigt. Für den Metallring wird eine gute thermische Anpassung erreicht, wenn dieser beispielsweise aus Titan oder einer Titanlegierung gefertigt ist. Diese Materialien weisen außerdem eine gute Abratikonsfestigkeit auf, so dass auch eine hohe mechanische Stabilität der Anordnung erreicht werden kann.

Die erfindungsgemäße Anordnung ist durch die Vermeidung von Elastomerdichtungen und durch den Einsatz einer keramischen Messzelle hoch temperaturfest. Ferner kommen keine benennbaren Materialien zum Einsatz, so dass ein Einsatz in Sauerstoffumgebungen problemlos möglich ist.

Ein erfindungsgemäßes Verfahren zur Herstellung einer solchen Messanordnung zeichnet sich dadurch aus, dass in einem ersten Schritt der Metallring mit dem Keramikring verbunden wird und in einem zweiten Schritt der Keramikring an der Messzelle befestigt wird.

Bevorzugt werden der Metallring und der Keramikring verlötet und/oder der Keramikring und die Druckmesszelle verglast.

In einem dritten Schritt können außerdem der Metallring in einem Prozessanschluss befestigt, bevorzugt eingeschweißt werden.

Erfindungsgemäß werden die oben genannten Schritte in der oben wiedergegebenen Reihenfolge durchlaufen, da auf diese Weise insbesondere der erhöhte Wärmeeintrag eines Hartlötprozesses, mit dem der Metallring vorzugsweise mit dem Keramikring verbunden wird, unabhängig von der Messzelle durchgeführt werden kann und damit zu keinen thermisch negativen Einflüssen auf diese führt.

Die vorliegende Erfindung wird nachfolgend unter Bezugnahme auf die beigefügten Figuren eingehend erläutert. Es zeigen:
- Figur 1:: eine schematische Darstellung einer erfindungsgemäßen Messanordnung,
- Figur 2:: eine Ausschnittsvergrößerung aus Figur 1,
- Figur 3:: die Ansicht aus Figur 2 in einer alternativen Ausgestaltung und
- Figur 4:: den Ablauf eines erfindungsgemäßen Verfahrens.

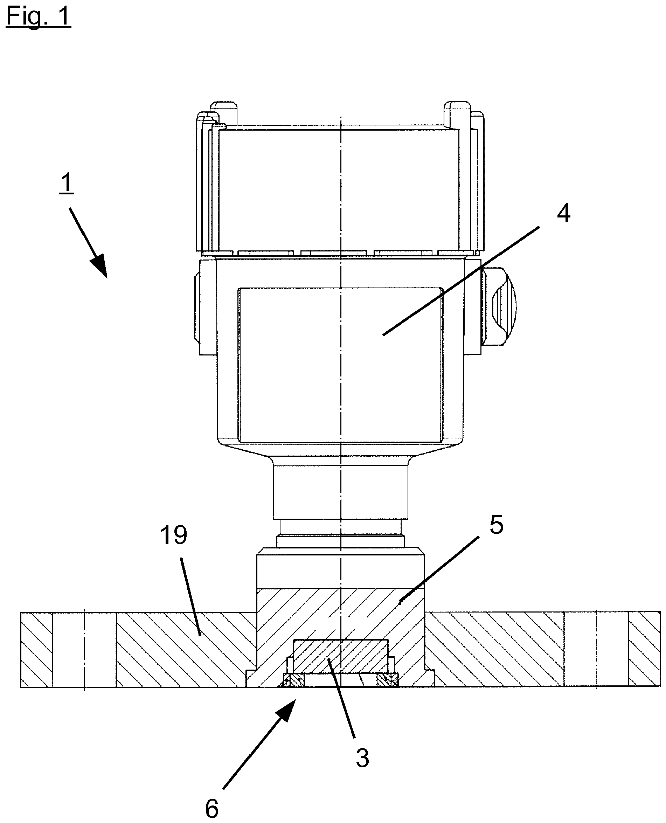

Figur 1 zeigt eine schematische Darstellung einer erfindungsgemäßen Messanordnung 1, wobei die Messanordnung 1 über einen Prozessanschluss 5 in einem Flansch 19 angeordnet ist. Der Prozessanschluss 5, der beispielsweise aus Titan oder einer Titanlegierung gefertigt ist, ist mit dem Flansch 19 umlaufend verschweißt und stellt damit eine druck- und diffusionsdichte Verbindung zwischen der Messanordnung 1 und dem Flansch 19 her. In dem Prozessanschluss 5 ist in Richtung einer Prozessumgebung orientiert über eine Befestigungsanordnung 6 eine keramische Messzelle 3 gehaltert.

Rückseitig der Messzelle 3 und des Prozessanschlusses 5 ist ein Gehäuse 4 angeordnet, in dem beispielsweise eine Messelektronik sowie Ein- und Ausgabegeräte für die Messanordnung untergebracht sein können.

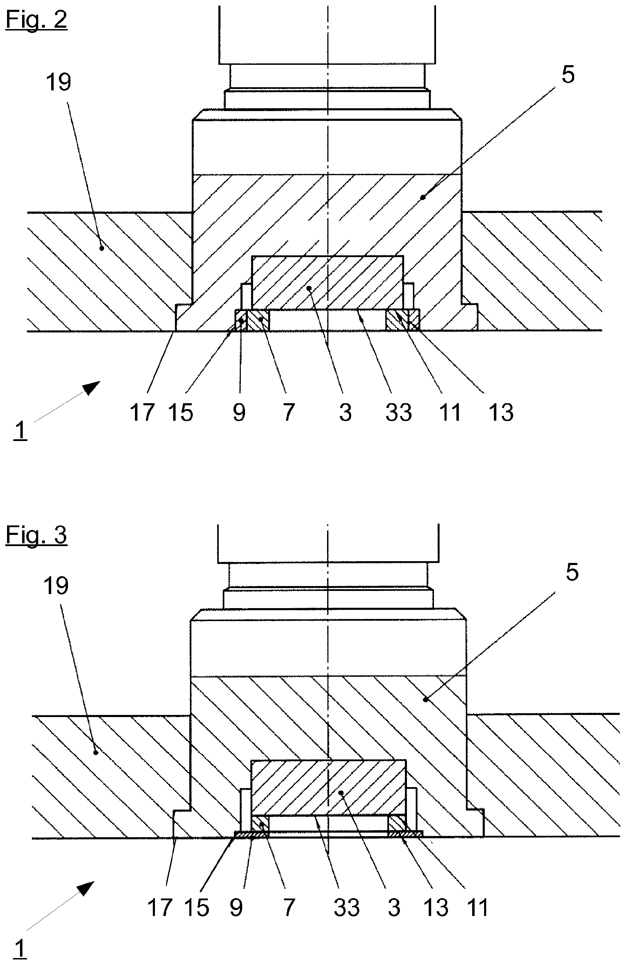

Figur 2 zeigt eine Ausschnittsvergrößerung aus Figur 1. In dieser Ausschnittsvergrößerung ist besonders gut die Anordnung der Messzelle 3 in den Prozessanschluss 5 sowie die Befestigung des Prozessanschlusses 5 an dem Flansch 19 zu erkennen.

Die Messzelle 3 ist über die Befestigungsanordnung 6, die im vorliegenden Ausführungsbeispiel durch einen Keramikring und einen radial zu diesem Keramikring angeordneten Metallring gebildet ist in dem Prozessanschluss 5 gehaltert

An der Messzelle 3 ist in Axialrichtung, d. h. vorderseitig in einem Randbereich umlaufend ein Keramikring 7 angeordnet, der im vorliegenden Ausführungsbeispiel, in dem die Messzelle 3 als Druckmesszelle ausgebildet ist, umlaufend auf einer Membran 33 der Druckmesszelle sitzt.

Der Keramikring 7 gemäß Figur 2 weist einen Außendurchmesser ka auf, der die Messzelle 3 in Radialrichtung überragt.

Der Keramikring 7 ist in diesem Ausführungsbeispiel über eine Lotverbindung 11, die mittels eines Glaslots hergestellt ist, an die Messzelle 3 angeglast. Umlaufend zu dem Keramikring, d. h. in Radialrichtung angeordnet ist ein Metallring 9 angeordnet. Der Metallring 9 und der Keramikring 7 sind über eine Hartlötverbindung 13, die mittels eines Silberbasislots hergestellt ist, miteinander verlötet. Der Metallring 9 ist seinerseits wiederum umlaufend mit dem Prozessanschluss 5 verschweißt, wodurch eine Schweißverbindung 15 gebildet ist. Auf diese Weise ist die keramische Messzelle 3 über den Keramikring 7 und den Metallring 9 in dem Prozessanschluss 5 gehaltert und sitzt somit diffusionsdicht und dichtungsfrei in dem Prozessanschluss 5. Der Prozessanschluss 5 seinerseits ist außerdem umlaufend mit dem Flansch 19 verschweißt, so dass auch hier eine diffusionsdichte und dichtungsfreie Anordnung geschaffen ist.

In dem Ausführungsbeispiel gemäß Figur 2 sind der Keramikring 7 und der Metallring 9 bevorzugt derart dimensioniert, dass bei einer Anordnung der Messzelle 3 in dem Prozessanschluss 5 eine vorderseitige plane Anordnung erreicht wird. Dies ist insbesondere im Bereich von hoch reinen, pharmazeutischen oder Lebensmittelanwendungen notwendig, da in diesen Bereichen Spalt- oder Absatzbildungen möglichst weitgehend zu vermeiden sind.

Figur 3 zeigt eine alternative Ausgestaltung der Befestigungsanordnung 6, wobei in dem in Figur 3 dargestellten Ausführungsbeispiel der Metallring 9 in Axialrichtung zu dem Keramikring 7 und damit zur Prozessumgehung hin orientiert, angeordnet ist. Der Keramikring 7 sitzt auch in diesem Ausführungsbeispiel in Axialrichtung, d.h. vorderseitig auf der Membran 33 der Messzelle 3, im Falle einer Druckmesszelle, bevorzugt vorderseitig an deren Membran 33.

Im vorliegenden Ausführungsbeispiel weist der Keramikring 7 einen Außendurchmesser Ka auf, der dem Außendurchmesser der Messzelle 3 entspricht, d. h. dass der Keramikring 7 und die Messzelle 3 in Radialrichtung gesehen außenseitig bündig abschließen. Der Keramikring 7 ist wie auch im Ausführungsbeispiel gemäß Figur 2 mit der Messzelle 3 über eine Lotverbindung, die mittels eines Glaslots hergestellt ist, verbunden. Der Metallring 9 gemäß dem Ausführungsbeispiel in Figur 3 weist einen Innendurchmesser mi auf, der einem Innendurchmesser ki des Keramikrings 7 entspricht. Der Keramikring 7 und der Metallring 9 schließen damit in Radialrichtung innenseitig bündig ab, so dass eine Kanten- oder Spaltbildung in diesem Bereich in jedem Fall vermieden wird.

Der Metallring 9 weist außerdem einen Außendurchmesser ma auf, der größer ist als ein Außendurchmesser ha des Verankerungsrings 7. Der Metallring 9 überragt den Verankerungsring 7 damit in Radialrichtung, so dass ein umlaufender Rand gebildet ist, der beispielsweise genutzt werden kann, um den Metallring 9 mit dem Prozessanschluss 5 zu verschließen.

Eine axiale Anordnung des Metallrings 9 zu dem Keramikring 7 bietet die Möglichkeit, dass auf diese Weise eine zusätzliche Fügenaht zur Prozessumgebung hin vermieden werden kann und eine plane Oberfläche des Metallrings 9 sowie der Vorderseite des Prozessanschlusses 5 einfach erreicht werden kann. Insbesondere kann die Schweißverbindung 15 zwischen dem Metallring 9 und dem Prozessanschluss 5 sowie die Schweißnaht 17 zwischen dem Prozessanschluss 5 und dem Flansch 19 gut verschliffen werden, so dass in diesem Bereich eine plane Oberfläche geschaffen wird.

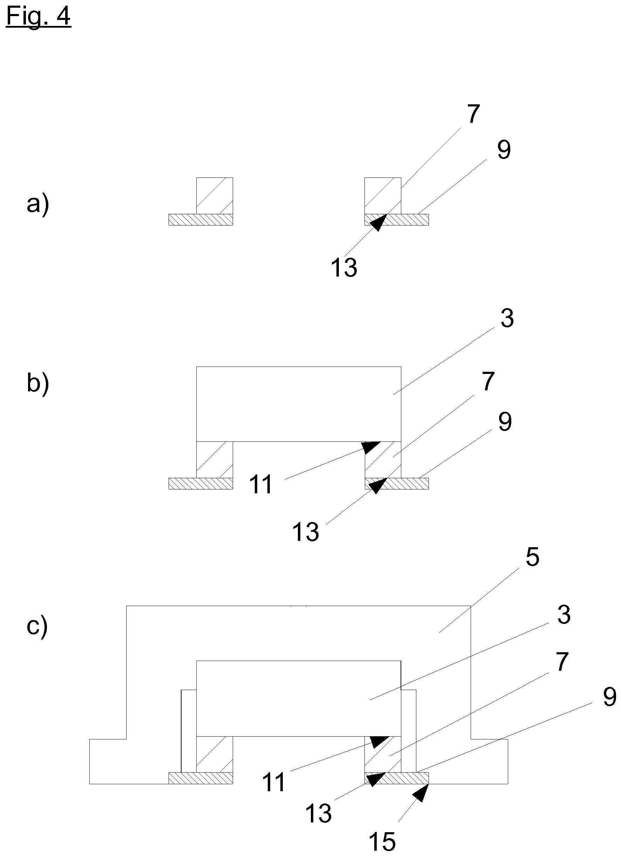

Figur 4 verdeutlicht den Ablauf des erfindungsgemäßen Verfahrens, bei dem in einem ersten Schritt a der Metallring 9 und der Keramikring 7 mittels einer Hartlötverbindung 13 verbunden werden. In einem zweiten Schritt b wird der Keramikring 7 an der Messzelle 3 mittels einer Lotverbindung, bevorzugt einer Glaslotverbindung 11 verbunden. Auf diese Weise wird insbesondere ein Temperatureintrag der beim Erzeugen der Hartlötverbindung 13 notwendig ist zu einem Zeitpunkt erzeugt, zu dem keine negativen Einflüsse auf die Messzelle 3 zu erwarten sind.

Die Gesamtanordnung aus Messzelle 3, Keramikring 7 und Metallring 9 wird anschließend in einem dritten Schritt c in dem Prozessanschluss 5 angeordnet und mittels einer Schweißverbindung 15 mit diesem verbunden. Vorzugsweise sind sowohl die Messzelle 3 als auch der Keramikring 7 aus dem gleichen Material, beispielsweise Aluminiumoxid, gefertigt. Der Metallring 9 und der Prozessanschluss 5 sind ebenfalls beide vorzugsweise aus dem gleichen Material, beispielsweise Titan, gefertigt.

### Bezugszeichenliste

- 1: Messanordnung
- 3: Messzelle
- 4: Gehäuse
- 5: Prozessanschluss
- 6: Befestigungsanordnung
- 7: Keramikring
- 9: Metallring

- 11: Lotverbindung
- 13: Hartlötverbindung
- 15: erste Schweißverbindung
- 17: zweite Schweißverbindung
- 19: Flansch

- 31: Messzellenkörper
- 33: Membran

- ki: Innendurchmesser des Keramikrings
- ka: Außendurchmesser des Keramikrings
- mi: Innendurchmesser des Metallrings
- ma: Außendurchmesser des Metallrings

- a: erster Schritt
- b: zweiter Schritt
- c: dritter Schritt

## Patentansprüche

1. Messanordnung (1) mit einer keramischen Messzelle (3) und einem metallischen Prozessanschluss (5) zum Verbinden der Messzelle (3) mit einer Messumgebung, wobei die Messzelle (3) in dem Prozessanschluss (5) dichtungsfrei, das heißt unter Ausschluss der Verwendung von Polymerschichten im Kontakt mit dem Prozessmedium, und diffusionsdicht befestigt ist,
**dadurch gekennzeichnet, dass** die Messzelle (3) an einem Keramikring (7) befestigt ist, der an einem Metallring (9) zur Befestigung in dem Prozessanschluss (5) angeordnet ist, und der Metallring (9) axial zu dem Keramikring (7) angeordnet ist, wobei der Metallring (9) mit dem Keramikring (7) mit einer Hartlötverbindung (13) verbunden ist, wobei der Metallring (9) einen Innendurchmesser (ki) aufweist, der einem Innendurchmesser (ki) des Keramikrings (7) entspricht und einen Außendurchmesser (ka) aufweist, der größer als ein Außendurchmesser (ka) des Keramikrings (7) ist, wobei der Keramikring (7) an der Messzelle (3) mit einer Lotverbindung (11) befestigt ist.

2. Messanordnung (1) nach Anspruch 1,
**dadurch gekennzeichnet, dass** die Messzelle (3) als Druckmesszelle mit einer keramischen Membran ausgebildet ist.

3. Messanordnung (1) nach Anspruch 1 oder 2,
**dadurch gekennzeichnet, dass** die Lotverbindung (11) mit einem Hartlot oder einem Glaslot hergestellt ist.

4. Messanordnung (1) nach Anspruch 3,
**dadurch gekennzeichnet, dass** das Hartlot ein Silberbasislot ist.

5. Messanordnung (1) nach einem der vorhergehenden Ansprüche,
**dadurch gekennzeichnet, dass** die Hartlötverbindung (13) mit einem Silberbasislot hergestellt ist.

6. Messanordnung (1) nach einem der vorhergehenden Ansprüche,
**dadurch gekennzeichnet, dass** der Keramikring (9) vorderseitig, das heißt in Axialrichtung zur Prozessumgehung hin, an der Messzelle (3) angeordnet ist.

7. Messanordnung (1) nach einem der vorhergehenden Ansprüche,
**dadurch gekennzeichnet, dass** der Keramikring (9) und die Messzelle (3) aus dem gleichen Material, vorzugsweise aus Aluminiumoxid, bestehen.

8. Messanordnung (1) nach einem der vorhergehenden Ansprüche,
**dadurch gekennzeichnet, dass** dass der Metallring (9) aus Titan oder einer Titanlegierung besteht.

9. Verfahren zur Herstellung einer Messanordnung (1) nach einem der vorhergehenden Ansprüche,
**dadurch gekennzeichnet, dass** in einem ersten Schritt (a) der Metallring (9) mit dem Keramikring (7) mit einer Hartlötverbindung verbunden wird und in einem zweiten Schritt (b) der Keramikring (7) an der Messzelle (3) mit einer Lotverbindung befestigt wird.

10. Verfahren nach Anspruch 9,
**dadurch gekennzeichnet, dass** der Keramikring (7) mit der Messzelle (3) verglast wird.

11. Verfahren nach einem der Ansprüche 9 oder 10,
**dadurch gekennzeichnet, dass** der der Metallring (9) in einem dritten Schritt (c) in einem Prozessanschluss (5) befestigt, bevorzugt eingeschweißt, wird.

## Claims

1. Measuring arrangement (1) with a ceramic measuring cell (3) and a metallic process connection (5) for connecting a measuring cell (3) to a measuring environment, wherein the measuring cell (3) is fastened in the process connection (5) without gaskets, i.e. excluding the use of polymer layers in contact with the process medium, and in a diffusion-resistant fashion, **characterized in that** the measuring cell (3) is fastened at a ceramic ring (7), which is arranged at a metal ring (9) for fastening in the process connection (5), and the metal ring (9) is arranged axially in reference to the ceramic ring (7), wherein the metal ring (9) is connected to the ceramic ring (7) with a hard solder connection (13), wherein the metal ring (9) shows an interior diameter (ki), which is equivalent to an interior diameter (ki) of the ceramic ring (7), and shows an exterior diameter (ka), which is greater than the exterior diameter (ka) of the ceramic ring (7), wherein the ceramic ring (7) is fastened at the measuring cell (3) with a solder connection (11).

2. Measuring arrangement (1) according to claim 1, **characterized in that** the measuring cell (3) is embodied as a pressure measuring cell with a ceramic diaphragm.

3. Measuring arrangement (1) according to claim 1 or 2, **characterized in that** the solder connection (11) is produced with a hard solder or a glass solder.

4. Measuring arrangement (1) according to claim 3, **characterized in that** the hard solder is a silver-based solder.

5. Measuring arrangement (1) according to any one the above claims, **characterized in that**
the hard solder connection (13) is produced with a silver-based solder.

6. Measuring arrangement (1) according to any one of the above claims, **characterized in that** the ceramic ring (9) is arranged with its front-side, i.e. in the axial direction to the process environment, at the measuring cell (3).

7. Measuring arrangement (1) according to any one of the above claims, **characterized in that** the ceramic ring (9) and the measuring cell (3) are made from the same material, preferably aluminium oxide.

8. Measuring arrangement (1) according to any one the above claims, **characterized in that**
the metal ring (9) is made from titanium or a titanium alloy.

9. Method for producing a measuring arrangement (1) according to any one of the above claims, **characterized in that** in a first step (a) the metal ring (9) is connected to the ceramic ring (7) with a hard solder connection and in a second step (b) the ceramic ring (7) is fastened at the measuring cell (3) with a solder connection.

10. Method according to claim 9, **characterized in that** the ceramic ring (7) is glazed to the measuring cell (3).

11. Method according to either of claims 9 or 10, **characterized in that** the metal ring (9) is fastened, preferably welded, in a third step (c) in a process connection (5).

## Revendications

1. Dispositif de mesure (1) comprenant une cellule de mesure en céramique (3) ainsi qu'un raccord de process métallique (5) permettant de relier la cellule de mesure (3) avec un environnement de mesure, la cellule de mesure (3) étant fixée dans le raccord de process (5) sans étanchéité, c'est-à-dire à l'exclusion de l'utilisation de couches polymères en contact avec le fluide de process, et de façon étanche à la diffusion,
**caractérisé en ce que**
la cellule de mesure (3) est fixée à une bague en céramique (7) qui est montée sur une bague métallique (9) de fixation dans le raccord de process (5), et la bague métallique (9) est montée axialement par rapport à la bague en céramique (7), la bague métallique (9) étant reliée à la bague en céramique (7) par un brasage fort (13), la bague métallique (9) ayant un diamètre interne (ki) qui correspond au diamètre interne (ki) de la bague en céramique (7) et un diamètre externe (ka) qui est supérieur au diamètre externe (ka) de la bague en céramique (7), la bague en céramique (7) étant fixée à la cellule de mesure (3) par un brasage (11) .

2. Dispositif de mesure (1) conforme à la revendication 1, **caractérisé en ce que**
la cellule de mesure (3) est réalisée sous la forme d'une cellule de mesure de pression comprenant une membrane en céramique.

3. Dispositif de mesure (1) conforme à la revendication 1 ou 2,
**caractérisé en ce que**
le brasage (11) est obtenu avec une brasure forte ou une brasure au verre.

4. Dispositif de mesure (1) conforme à la revendication 3, **caractérisé en ce que**
la brasure forte est une brasure à base d'argent.

5. Dispositif de mesure (1) conforme à l'une des revendications précédentes,
**caractérisé en ce que**
le brasage fort (13) est obtenue par une brasure à base d'argent.

6. Dispositif de mesure (1) conforme à l'une des revendications précédentes,
**caractérisé en ce que**
la bague en céramique (9) est montée sur la face avant de la cellule de mesure (3), c'est-à-dire en direction axiale par rapport à l'environnement de process.

7. Dispositif de mesure (1) conforme à l'une des revendications précédentes,
**caractérisé en ce que**
la bague en céramique (9) et la cellule de mesure (3) sont réalisées dans le même matériau, de préférence en oxyde d'aluminium.

8. Dispositif de mesure (1) conforme à l'une des revendications précédentes,
**caractérisé en ce que**
la bague métallique (9) est réalisée en titane ou en un alliage de titane.

9. Procédé d'obtention d'un dispositif de mesure (1) conforme à l'une des revendications précédentes,
**caractérisé en ce que**
dans une première étape (a) la bague métallique (9) est reliée à la bague en céramique (7) par un brasage fort, et dans une seconde étape (b) la bague en céramique (7) est fixée sur la cellule de mesure (3) par un brasage.

10. Procédé conforme à la revendication 9,
**caractérisé en ce que**
la bague en céramique (7) est vitrifiée avec la cellule de mesure (3).

11. Procédé conforme à l'une des revendications 9 et 10, **caractérisé en ce que**
dans une troisième étape (c) la bague métallique (9) est fixée dans un raccord de process (5), et de préférence soudée dans celui-ci.
